# EUROPEAN PATENT SPECIFICATION

(11) **EP 0 374 519 B1**
(45) Date of publication and mention of the grant of the patent: **17.08.1994**
(21) Application number: 89121702.8
(22) Date of filing: 24.11.1989
(51) Int. Cl.: B29C 45/17, B29C 45/14, D06F 37/26

(54) **A method of producing plastic tanks for washing machines and a tank thus obtained**
Verfahren zum Herstellen von Behältern aus Kunststoff für Waschmaschinen und so erhaltener Behälter
Procédé de fabrication de cuves en matière plastique pour machines à laver et cuve ainsi obtenue

(30) Priority: 21.12.1988 IT 4577388
(43) Date of publication of application: 27.06.1990
(73) Proprietor: INDUSTRIE ZANUSSI S.p.A., I-33170 Pordenone (IT)
(72) Inventor: Tabasso, Mario, I-33080 Porcia (Pordenone) (IT); Durazzani, Piero, I-33080 Porcia (Pordenone) (IT)
(74) Representative: Herrmann-Trentepohl, Werner, Dipl.-Ing.

(56) References cited:
- EP-A- 0 043 429
- EP-A- 0 219 115
- GB-A- 2 158 002
- KUNSTSTOFFE, vol. 76, no. 8, August 1986, pages 667-670, Munich, DE; T.PEARSON: "Formteilherstellung nach dem Cinpres-Verfahren"
- MACHINE DESIGN, vol. 54, no. 28, 9th December 1982, pages 99-102, Cleveland,US; D. R. DREGER: "The best of two worlds in plastics processing"
- PATENT ABSTRACTS OF JAPAN, vol. 7, no. 9 (M-185)[1154], 14th January 1983;& JP-A-57 167 217 (HASHIMOTO FORMING KOGYO) 15-10-1982

## Description

The present invention relates to a method of producing plastic tanks for washing machines that is capable of realizing structurally rigid and resistant tanks in a simple way and with a lower consumption of material compared with conventional tanks.

Plastic washing tanks for washing machines are known that substantially comprise a rigid structure constituting the peripheral cylindrical band and the circular bottom wall, and a separate front wall, also of circular shape, that is adapted to be united with the rigid structure using fixing means known as such. Such a washing tank is known from EP-A-0 219 115.

The bottom wall of such tanks furthermore has reinforcing ribs integrally formed therein, and houses a cylindrical metal bushing constituting the seat for the bearings supporting the drum shaft.

On the one hand, these ribs are required to provide greater mechanical resistance and structural stability to the tank but, on the other hand, they have the drawback of involving the use of a considerable amount of material for their manufacture. The present invention is therefore based on the problem of realizing the washing tank with structural features that are equal and even superior to those of conventional tanks but with a lower consumption of material, utilizing a production method as described in the adjoined claims of the patent.

The invention will be better understood from the following description, intended solely by way of a nonrestrictive example, and with reference to the adjoined drawings in which
Fig. 1 shows schematically a perspective exploded view of a washing tank realized by the present production method:
Figs. 2 and 3 show schematically the tank of Fig. 1 in two different working phases.

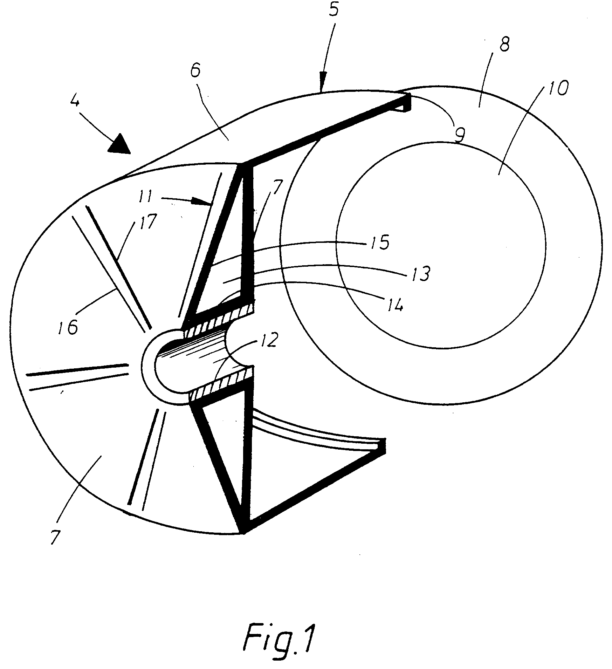

Referring to Fig. 1, one can see a washing tank 4 made of plastic to be used in the known way in washing machines, said tank substantially comprising a rigid structure 5 formed of peripheral cylindrical band 6 and circular bottom wall 7, as well as a separate front wall 8, also of circular shape, that is adapted to be united with the rigid structure using conventional fixing means and through the intermediary of at least one seal (not shown). For this purpose, front wall 8 is designed to fit corresponding front circular rim 9 formed integrally with peripheral band 6 upon introduction of the drum of the machine (not shown) into the tank, and is furthermore provided with a circular opening 10 for access to the drum.

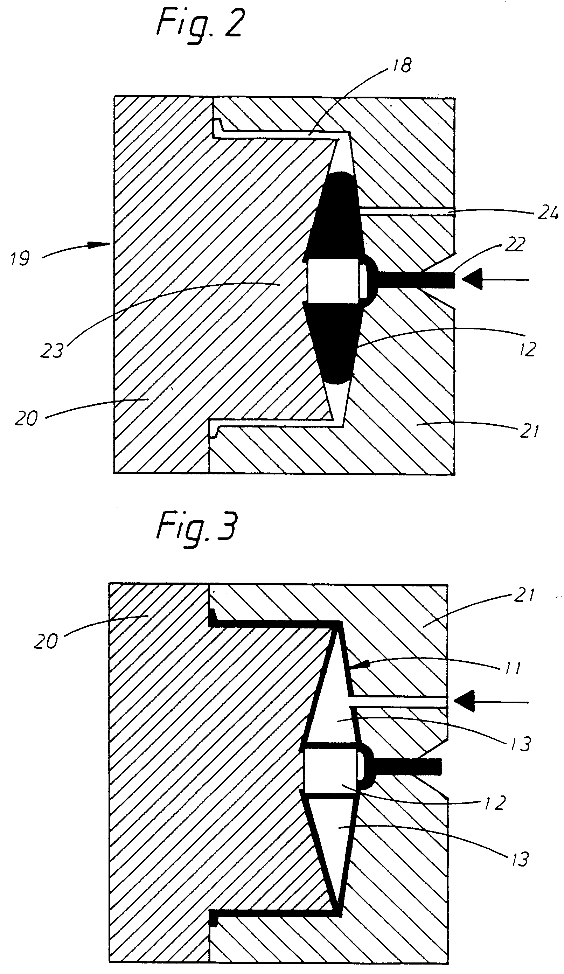

In its turn, bottom wall 7 is provided with a plurality of straight rigid arms 11 spaced apart at equal angles and extending radially toward the circumferential rim of the bottom wall, starting at a cylindrical metal bushing 12 passing centrally through the bottom wall and constituting the seat for the bearings (not shown) for supporting the driving shaft of the drum (not shown). Each radial arm 11 is, in particular, designed in a pyramid shape and provided with a hermetically sealed inside cavity 13 filled with air or another suitable gas and delimited by thin flat walls constituted by vertical bottom wall 7 of tank 4, horizontal wall 14 concentrically enclosing bushing 12, an inclined wall 15 and two lateral walls 16 and 17. Obviously, arm 11 can also be realized in a shape different from that described without going beyond the scope of the present invention. Referring now to Figs. 2 and 3, one can see the present tank during two different working phases of the production method for the tank.

As can be seen in Fig. 2, in the first working phase rigid structure 5 of tank 4 is obtained by injection molding of the plastic material in cavity 18 of mold 19 defined between die 20 and matrix 21 of the mold, while front wall 8 of tank 4 is obtained separately utilizing a further mold of the conventional type (not shown). Furthermore, in the described mold cylindrical bushing 12 is inserted onto a corresponding cylindrical projection 23 of die 20 before the plastic material is pressed into inside cavity 18 through at least one injection channel 22 of matrix 21.

The plastic material is injected into inside cavity 18 in mold 19 so as to occupy partially the portion of the cavity defining radial arms 11 of tank 4 and which is penetrated by at least one blow channel 24 passing through matrix 21, whose function will be described below. In the second working phase, shown in Fig. 3, air or another suitable gas is blown inside the mass of plastic material located in the mold through blow channel 24 utilizing conventional apparatus and techniques, such as blow-molding.

In particular, the air or gas is injected in a quantity so as to effect a swelling of the mass of plastic material, thereby forming inside cavities 13 in radial arms 11 in which the air or gas remains enclosed, and also causing the mass to fill the entire inside cavity 18 of mold 19. Thanks to the presence of hollow radial arms 11 filled with air or gas, the washing tank thus realized is therefore structurally rigid and mechanically resistant with a lower consumption of material compared to the conventional tanks equipped with reinforcing ribs.

## Claims

1. A method of producing a plastic washing tank for washing machines, comprising a rigid structure formed by the peripheral cylindrical band and the circular bottom wall, and a circular front wall adapted to be joined with the rigid structure by fixing means known as such and through the intermediary of at least one seal, the bottom wall being provided with a plurality of radial arms and a cylindrical metal bushing passing centrally through the wall and constituting the seat for the bearings of the driving shaft of the drum, the method being characterized in that it comprises a first working phase in which the plastic material is injected into the inside cavity (18) of the mold (19) for forming the rigid structure (5), into which the cylindrical bushing (12) is previously introduced, in a quantity so as to occupy partially the portion of the cavity defining the radial arms (11), and a second working phase in which air or another suitable gas is blown inside the plastic material through at least one blow channel (24) in the mold (19) in such a way as to swell the plastic material, thereby producing corresponding closed inside cavities (13) in the radial arms (11) that are filled with air or gas, and filling the entire inside cavity (18) of the mold (19) with the plastic material.

2. A plastic washing tank for washing machines realized by the production method of claim 1, characterized in that the radial arms (11) are preferably of pyramid shape and provided with at least one hermetically sealed inside cavity (13) containing air or another suitable gas.

## Patentansprüche

1. Verfahren zur Herstellung eines Waschbehälters aus Kunststoff für Waschmaschinen, der aus einer starren Konstruktion, die von dem zylindrischen Außenband und der kreisförmigen Rückwand gebildet wird, und aus einer kreisförmigen Vorderwand, die geeignet ist, an der starren Konstruktion durch an sich bekannte Befestigungsmittel und mit mindestens einer dazwischen angeordneten Dichtung angebracht zu werden, besteht, wobei die Rückwand mit einer Vielzahl von sich radial erstreckenden Armen und einer zylindrischen Lagerbuchse aus Metall versehen ist, die mittig durch die Wand hindurchführt und die Aufnahme für die Lager der Antriebswelle der Trommel bildet, **dadurch gekennzeichnet, daß** es einen ersten Arbeitsschritt umfaßt, bei dem in den inneren Hohlraum (18) der Gußform (19) zum Formen der starren Konstruktion (5), in den zuvor die zylindrische Lagerbuchse (12) eingeführt wurde, das Kunststoffmaterial in einer solchen Menge eingespritzt wird, daß es den Teil des Hohlraums, der die sich radial erstreckenden Arme (11) umgrenzt, teilweise ausfüllt, sowie einen zweiten Arbeitsschritt, bei dem Luft oder ein anderes geeignetes Gas durch mindestens einen Einspritzkanal (24) in der Form (19) dergestalt in das Kunststoffmaterial eingeblasen wird, daß das Kunststoffmaterial aufgebläht wird, wobei in den sich radial erstreckenden Armen (11) entsprechende in sich geschlossene innere Hohlräume (13) entstehen, die mit Luft oder Gas gefüllt sind, und der gesamte innere Hohlraum (18) der Gußform (19) mit dem Kunststoffmaterial ausgefüllt wird.

2. Waschbehälter aus Kunststoff für Waschmaschinen, der mit dem Herstellungsverfahren von Anspruch 1 ausgeführt ist, **dadurch gekennzeichnet, daß** die sich radial erstreckenden Arme (11) vorzugsweise pyramidenförmig sind und mit mindestens einem hermetisch dichten, inneren Hohlraum (13) versehen sind, der Luft oder ein anderes geeignetes Gas enthält.

## Revendications

1. Procédé de fabrication de cuves de lavage en matière plastique pour machines à laver, comprenant une structure rigide formée par la bande cylindrique périphérique et la paroi inférieure circulaire, et une paroi avant circulaire adaptée à être reliée à la structure rigide par un moyen de fixation connu en soi et par l'intermédiaire d'au moins un joint d'étanchéité, la paroi inférieure étant pourvue d'une pluralité de bras radiaux et d'un manchon métallique cylindrique traversant centralement la paroi et constituant le siège destiné aux paliers de l'arbre d'entraînement du tambour, le procédé étant caractérisé en ce qu'il comprend une première phase de travail, dans laquelle la matière plastique est injectée dans la cavité intérieure (18) du moule (19) pour former la structure rigide (5), dans laquelle le manchon cylindrique (12) est introduit au préalable, en une quantité permettant d'occuper partiellement la partie de la cavité définissant les bras radiaux (11) et une seconde phase de travail, dans laquelle de l'air ou un autre gaz approprié est soufflé à l'intérieur de la matière plastique, par l'intermédiaire d'au moins un canal de soufflage (24) situé dans le moule (19), de manière à faire gonfler la matière plastique, afin de produire des cavités intérieures (13) fermées correspondantes dans les bras radiaux (11) qui sont remplies avec de l'air ou un gaz, et à remplir toute la cavité intérieure (18) du moule (19) avec la matière plastique.

2. Cuve de lavage en matière plastique pour machines à laver, réalisée par le procédé de fabrication de la revendication 1, caractérisée en ce que les bras radiaux (11) présentent de préférence une forme pyramidale et sont pourvus d'au moins une cavité intérieure (13) isolée hermétiquement, contenant de l'air ou un autre gaz approprié.
